# EUROPÄISCHE PATENTSCHRIFT

(11) **EP 1 630 053 B1**
(45) Veröffentlichungstag und Bekanntmachung des Hinweises auf die Patenterteilung: **28.03.2007**
(21) Anmeldenummer: 05017298.0
(22) Anmeldetag: 09.08.2005
(51) Int. Cl.: B60T 7/04, B60T 13/72, B60T 8/40

(54) **Bremskrafterzeuger für eine hydraulische Fahrzeugbremsanlage und Fahrzeugbremsanlage**
Braking force generator for a hydraulic braking system for a vehicle
Générateur de force de freinage pour un système de freinage hydraulique d'un véhicule

(30) Priorität: 30.08.2004 DE 102004041924
(43) Veröffentlichungstag der Anmeldung: 01.03.2006
(73) Patentinhaber: Lucas Automotive GmbH, 56070 Koblenz (DE)
(72) Erfinder: Schlüter, Peter, 56206 Kammerforst (DE)
(74) Vertreter: Thum, Bernhard

(56) Entgegenhaltungen:
- WO-A-20/04080772
- DE-A1- 19 736 646
- DE-C1- 4 405 092

## Beschreibung

Die vorliegende Erfindung betrifft einen Bremskrafterzeuger für eine hydraulische Fahrzeugbremsanlage mit einem Krafteingangsglied, das mit einem Bremspedal koppelbar oder gekoppelt und in einem Basisgehäuse des Bremskrafterzeugers verlagerbar ist, einem Hauptbremszylinder, in dem ein Primärkolben verlagerbar geführt ist, wobei der Primärkolben mit dem Hauptbremszylinder eine Primärdruckkammer zur Erzeugung eines hydraulischen Bremsdrucks begrenzt, einer mit dem Krafteingangsglied koppelbaren Pedalgegenkraft-Simulationseinrichtung, einer Pedalbetätigungs-Erfassungseinrichtung zum Erfassen einer Pedalbetätigung und einer Betätigungskraft-Erzeugungseinrichtung zum Ausüben einer Betätigungskraft auf den Primärkolben.

Bei den heute üblichen Bremssystemen wird der zur Beaufschlagung der Radbremse am Fahrzeug notwendige hydraulische Bremsdruck überwiegend mittels eines Hauptbremszylinders erzeugt. Hierzu ist die Einleitung einer Betätigungskraft auf den genannten Hauptbremszylinder notwendig, welche in Reaktion auf eine Betätigung des Bremspedals durch den Fahrzeugführer erzeugt wird. Zur Verbesserung des Betätigungskomforts wird üblicherweise die eigentliche Bremspedalkraft mittels eines Bremskraftverstärkers um einen vorbestimmten Prozentsatz angehoben, so dass die notwendigen Bremspedalbetätigungskräfte für eine gewünschte Fahrzeugverzögerung derart klein gehalten werden können, dass es jedem Fahrer ohne Anstrengung möglich ist, das Fahrzeug adäquat abzubremsen. Ein derartiges Bremssystem mit Bremskraftverstärker ist beispielsweise aus der DE 44 05 092 bekannt.

Nachteilig wirkt sich bei diesen Bremssystemen aus, dass der Fahrer durch seine Betätigungsaktion am Bremspedal in jedem Fall den hydraulischen Druck an den Radbremsen beeinflusst. Solange dies die Bremssituation unterstützt, ist dies unproblematisch. Sobald der Fahrer aber bezogen auf die tatsächliche Bremssituation falsch reagiert, indem er beispielsweise zu viel oder zu wenig Bremsdruck einsteuert, kann das Bremsverhalten, insbesondere der Bremsweg sowie die Spurtreue, des Fahrzeugs verschlechtert werden, was im schlimmsten Fall zu einem Unfall führen kann.

Moderne Fahrzeugregelsysteme (ABS, ESP, TC etc.) sind heutzutage in der Lage die optimale, notwendige Bremsleistung in den physikalische Grenzen anhand des momentanen Fahrzustands des Fahrzeugs zu ermitteln und somit eine Bremsung zu optimieren. Voraussetzung hierfür ist allerdings, dass der oben genannte direkte Einfluss des Fahrers auf den Bremsdruck verhindert wird. Ferner wird es inzwischen auch als unkomfortabel angesehen, dass der Fahrer am Bremspedal die Wirkung des Fahrzeugregelsystems spürt, wie beispielsweise bei Aktivierung des ABS ein wiederholtes Rütteln am Bremspedal.

Um diesen mit Fahrzeugregelsystemen verbundenen Anforderungen Rechnung zu tragen, wird bei modernen Bremssystemen bereits das Bremspedal von der Bremskrafterzeugung entkoppelt, wobei dann die Bremspedalbetätigung nur noch zur Ermittlung des Verzögerungswunsches des Fahrers dient. Die eigentliche Bremskrafterzeugung, beispielsweise zur Betätigung des Hauptbremszylinders, erfolgt dann durch einen separaten Bremskrafterzeuger und zwar nur noch basierend auf Steuerungsdaten eines elektronischen Steuergeräts. Hierdurch kann vorab überprüft werden, ob beispielsweise die gewünschte Fahrzeugverzögerung nicht die, durch die Fahrzeugregelsysteme (ABS, ESP, TC etc.) ermittelten, momentan gültigen physikalischen Grenzen hinsichtlich Bremsweg und Spurtreue überschreiten würde. Gleichzeitig kann natürlich auch eine vom Fahrer zu gering eingesteuerte Verzögerung zur Minimierung des Anhalteweges in Notsituationen vom Steuergerät durch Einsteuerung eines höheren Bremsdrucks ausgeglichen werden. Ein derartiges System ist beispielsweise in dem gattungsbildenden Stand der Technik gemäß der EP 1 070 006 beschrieben. Es hat sich jedoch gezeigt, dass derartige Bremssysteme verhältnismä-ßig kostenintensiv in der Herstellung sind und einen erheblichen gerätetechnischen Aufwand erfordern, um auch dann einen zuverlässigen Bremsbetrieb gewährleisten zu können, wenn die Mittel zu Bremskrafterzeugung einmal ausfallen sollten. Ein weiterer Nachteil liegt bei derartigen Systemen darin, dass sie in einem Notbetriebsfall, in dem die Bremskrafterzeugung ausfällt, einen verhältnismäßig großen Leerweg aufweisen, bis das Bremssystem aufgrund einer dann eintretenden direkten mechanischen Kopplung zwischen Bremspedal und Primärkolben überhaupt eine Bremswirkung zeigt.

DE 197 36 646 offenbart einen Bremskrafterzeuger, der eine Federanordnung aufweist, die zwei in Serie geschaltete Federn umfasst. Hier ist die Federkraft der zweiten Feder deutlich größer als die Federkraft der ersten Feder; im Fall des Versagens der Verstärkerstufe des Bremskrafterzeugers bestimmt im Wesentlichen nur die Kraft der schwächeren Feder die Bremsdruckrückmeldung über das Krafteingangsglied.

Ein wesentlicher Aspekt ist bei der Bereitstellung von Pedalgegenkraft-Simulationseinrichtungen das sogenannte "Pedalgefühl". Hierunter versteht man die Art der Entfaltung und Höhe der einer Bremsbetätigung durch die Pedalgegenkraft-Simulationseinrichtung entgegengesetzten Kräfte im Vergleich zur erzielten Bremsung. In der Regel ist das Pedalgefühl nach Vorgaben von Fahrzeugherstellern einzustellen. Dies macht es erforderlich, Vorkehrungen für eine mögliche Einflussnahme auf das Betriebsverhalten der Pedalgegenkraft-Simulationseinrichtung zu treffen.

Es ist daher eine Aufgabe der vorliegenden Erfindung, einen Bremskrafterzeuger der eingangs bezeichneten Art bereitzustellen, welcher bei verhältnismäßig einfachem und kostengünstigem Aufbau eine hohe Zuverlässigkeit aufweist und bei dem die Pedalgegenkraft-Simulationseinrichtung in ihrem Verhalten veränderbar ist.

Diese Aufgabe wird durch einen Bremskrafterzeuger mit den eingangs bezeichneten Merkmalen gelöst, bei welchem die Pedalgegenkraft-Simulationseinrichtung über ein Hydrauliksystem mit dem Krafteingangsglied koppelbar ist, wobei das Hydrauliksystem mit einem in der hydraulischen Verbindung zur Pedalgegenkraft-Simulationseinrichtung vorgesehenen Drosselventil ausgebildet ist, das wahlweise in verschiedene Drosselventilstellungen schaltbar ist.

Durch die Bereitstellung eines in verschiedene Drosselventilstellungen schaltbaren Drosselventils in einer hydraulischen Verbindung zwischen der Pedalgegenkraft-Simulationseinrichtung und der Betätigungskraft-Erzeugungseinrichtung kann das Pedalgefühl wesentlich beeinflusst werden. Je nach Wahl der Drosselventilstellung spürt der Fahrer am Bremspedal einen größeren oder weniger großen Widerstand gegen eine Pedalbetätigung, was es beispielsweise möglich macht, ein sportliches oder komfortables Verhalten der Bremsanlage zu simulieren.

Gemäß einer Weiterbildung der Erfindung kann vorgesehen sein, dass das Drosselventil in einer Hydraulikleitung zwischen einer Hydraulikkammer der Betätigungskraft-Erzeugungseinrichtung und der Pedalgegenkraft-Simulationseinrichtung, vorzugsweise zwischen der Pedalgegenkraft-Simulationseinrichtung und einer Schaltventilanordnung, vorgesehen ist. Die Schaltventilanordnung kann beispielsweise dazu vorgesehen sein, um die Pedalgegenkraft-Simulationseinrichtung vollständig von der Betätigungskraft-Erzeugungseinrichtung abzukoppeln. Dies kann beispielsweise dann erforderlich sein, wenn Teile der Fahrzeugbremsanlage ausgefallen sind, so dass die Pedalbetätigungskraft in einen Notbetriebsmodus vollständig zur Erzeugung einer Betätigungskraft auf den Primärkolben genutzt werden muss. Gemäß einer vorteilhaften Weiterbildung der Erfindung können auch das Drosselventil und die Schaltventilanordnung als gemeinsame Funktionseinheit ausgebildet sein.

Bei einer Ausführungsform der Erfindung kann vorgesehen sein, dass das Drosselventil nach Maßgabe eines vorbestimmten Drosselverhaltens in eine bestimmte im wesentlichen unveränderte Drosselstellung schaltbar ist. So ist es möglich, beispielsweise bei Montage des Bremskrafterzeugers eine bestimmte Drosselventilstellung einzustellen, die dann dauerhaft aufrechterhalten wird. Alternativ hierzu kann vorgesehen sein, dass das Drosselventil elektromagnetisch ansteuerbar ist, wobei die Drosselventilstellung nach Maßgabe der elektromagnetischen Ansteuerung veränderbar ist. Dadurch ist es möglich, dass das Drosselventil nach Maßgabe bestimmter Betriebsparameter des Fahrzeugs ansteuerbar ist. So kann beispielsweise nach Maßgabe einer Schaltstellung eines bestimmten Schalters, der dem Fahrer beispielsweise die Wahl zwischen einer sportlichen und einer komfortablen Bremsabstimmung gibt, die Drosselventilstellung verändert werden. Auch bestimmte fahrdynamische Parameter können Einfluss auf die Drosselventilstellung nehmen.

Gemäß einem Ausführungsbeispiel der Erfindung weist das Drosselventil ein Ventilgehäuse und einen in dem Ventilgehäuse verlagerbar geführten Ventilkolben auf. Vorzugsweise ist der Ventilkolben druckentlastet in dem Ventilgehäuse geführt. Dies bedeutet, dass der Ventilkolben bei einer elektromagnetischen Betätigung nicht gegen anliegende Hydraulikdrücke arbeiten muss. In diesem Zusammenhang kann erfindungsgemäß ferner vorgesehen sein, dass das Ventilgehäuse eine bestrombare Spule aufnimmt und dass der Ventilkolben integral mit einem Ankerelement ausgebildet oder zur gemeinsamen Bewegung mit diesem gekoppelt ist.

Eine Weiterbildung der Erfindung sieht vor, dass das Ventilgehäuse eine Drosselöffnung aufweist, die in der fluidischen Verbindung zwischen Betätigungskraft-Erzeugungseinrichtung und Pedalgegenkraft-Simulationseinrichtung liegt, und dass der Ventilkolben einen Drosselabschnitt aufweist, der in Abhängigkeit von der Drosselventilstellung in der Drosselöffnung positionierbar ist. Vorzugsweise ist die Drosselöffnung konisch ausgebildet. Ferner kann bei einer Weiterbildung dieser Ausführungsform vorgesehen sein, dass der Ventilkolben durch ein Federelement in die Drosselöffnung, vorzugsweise in eine Drosselventilstellung maximaler Drosselwirkung, vorgespannt ist. Dadurch kann erreicht werden, dass erst nach Bestromung der Spule eine hinreichend Freigabe der Drosselöffnung erreicht wird, die eine spürbare Aktivierung der Pedalgegenkraft-Simulationseinrichtung zulässt.

Alternativ zu der vorstehend beschriebenen Ausführungsform kann erfindungsgemäß auch vorgesehen sein, dass der Ventilkolben zylindrisch ausgebildet ist und in einer Ventilbohrung in dem Ventilgehäuse oder dem Basisgehäuse abgedichtet aufgenommen ist, wobei die Ventilbohrung in der fluidischen Verbindung zwischen Betätigungskraft-Erzeugungseinrichtung und Pedalgegenkraft-Simulationseinrichtung liegt, und dass der Ventilkolben mit einer Drosselnut ausgebildet ist, die in Abhängigkeit von der Drosselventilstellung eine gedrosselte Verbindung zwischen Betätigungskraft-Erzeugungseinrichtung und Pedalgegenkraft-Simulationseinrichtung bereitstellt. Je nach Stellung des Ventilkolbens innerhalb der Ventilbohrung kann so der effektive Durchmesser zur hydraulischen Verbindung zwischen Betätigungskraft-Erzeugungseinrichtung und Pedalgegenkraft-Simulationseinrichtung verändert werden und damit auch die Drosselwirkung des Drosselventils verändert werden. Vorzugsweise kann in diesem Zusammenhang vorgesehen sein, die Drosselnut mit einem sich verjüngenden Profil versehen ist.

Eine Weiterbildung dieser Ausführungsform sieht vor, dass der Ventilkolben durch ein Federelement in eine vorbestimmte Drosselventilstellung, vorzugsweise in eine Drosselventilstellung minimaler Drosselwirkung, vorgespannt ist.

Die Erfindung betrifft ferner eine Bremsanlage für ein Kraftfahrzeug mit einem Bremskrafterzeuger der vorstehend beschriebenen Art.

Die Erfindung wird im Folgenden anhand der beiliegenden Figuren erläutert. Es stellen dar:
- Fig.1: eine schematische Übersichtsdarstellung des erfindungsgemäßen Bremskrafterzeugers und der mit diesem gekoppelten Fahrzeugkomponenten;
- Fig.2: eine vergrößerte schematische Detailschnittansicht des das Drosselventil umfassenden Bereichs des Bremskrafterzeugers;
- Fig.3: eine Darstellung gemäß Figur 2 mit einer geringfügigen Abwandlung der Ausführungsform des Drosselventils gemäß Fig.2;
- Fig.4: eine weitere Ausführungsform eines Drosselventils in einer Darstellung entsprechend Fig. 2 und
- Fig.5: die Ausführungsform des Drosselventils gemäß Fig.4 in einer Stellung maximaler Drosselwirkung.

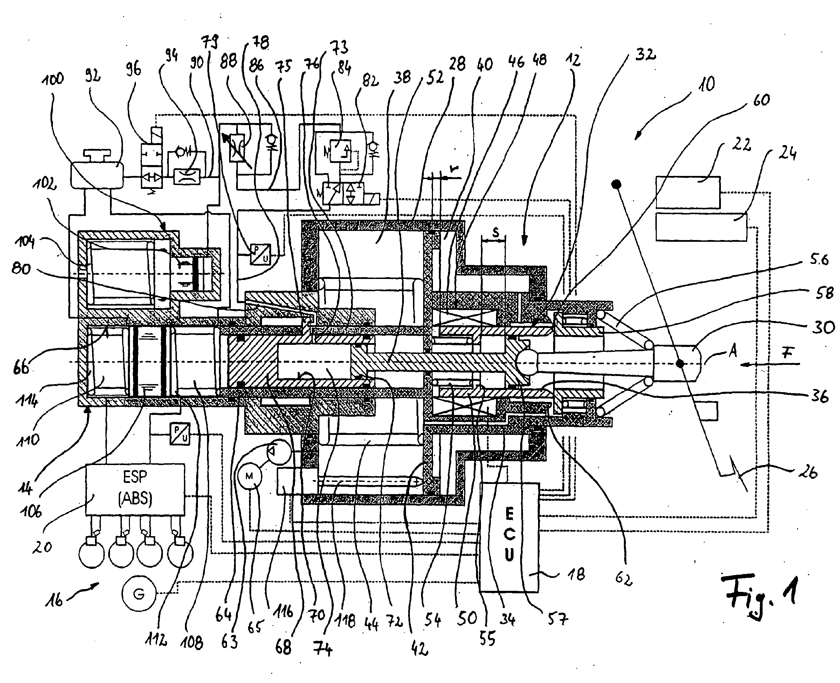

In Fig. 1 ist eine erfindungsgemäße Bremsanlage schematisch dargestellt und allgemein mit 10 bezeichnet. Diese umfasst einen Bremskrafterzeuger 12 und einen mit diesem gekoppelten Hauptbremszylinder 14. Der Hauptbremszylinder 14 kommuniziert in herkömmlicher Weise mit einem Bremssystem 16, das über eine elektronische Steuereinheit 18 gesteuert. Die elektronische Steuereinheit 18 erhält dabei Signale von verschiedenen Regelsystemen innerhalb des Fahrzeugs, wie beispielsweise einem elektronischen Stabilitätsprogramm und einem Antiblockiersystem 20, einem automatischen Abstandshaltesystem (cruise control) 22 oder dergleichen. Die von diesen Programmen zu der elektronischen Steuereinheit 18 fließenden Signale werden ausgewertet und zur Ansteuerung des erfindungsgemäßen Bremskrafterzeugers 12 genutzt. Darüber hinaus erhält die elektronische Steuereinheit 18 Signale von einem Drehwinkelsensor 24, der die aktuelle Stellung eines Bremspedals 36 erfasst und damit ein der aktuellen Pedalbetätigung entsprechendes Signal bereitstellt. Nach Maßgabe des die aktuelle Pedalbetätigung charakterisierenden Signals steuert die elektronische Steuereinheit 18 den Bremskrafterzeuger 12 an, dessen Aufbau und Funktionsweise im Folgenden erläutert wird.

Der erfindungsgemäße Bremskrafterzeuger 12 besteht in seiner Grundstruktur aus zwei Modulen, nämlich zum einen aus dem Hauptbremszylinder 14 und zum anderen aus einem Bremskrafterzeugergehäuse 28, in das der Hauptbremszylinder 14 eingesetzt und mit dem es lösbar verbunden ist. In dem in Fig.1 rechten Teil des Bremskrafterzeugers 12, insbesondere des Gehäuses 28, mündet ein stangenförmig ausgebildetes Krafteingangsglied 30. In diesem Bereich ist ein Steuerventil 32 vorgesehen. Das Steuerventil 32 umfasst ein Steuerventilgehäuse 34, das relativ zu dem Gehäuse 28 verlagerbar ist. Innerhalb des Steuerventilgehäuses 34 ist eine relativ zu diesem verlagerbare Ventilhülse 36 vorgesehen.

Der Bremskrafterzeuger 12 umfasst ferner eine innerhalb des Gehäuses 28 angeordnete Kammeranordnung mit einer Unterdruckkammmer 38 und einer Arbeitskammer 40, die über eine bewegliche Wand 42 dicht voneinander getrennt sind. Die bewegliche Wand 42 ist zur gemeinsamen Bewegung mit dem Steuerventilgehäuse 34 gekoppelt.

In dem Steuerventilgehäuse 34 ist eine elektrisch ansteuerbare Spule 46 eines elektromagnetischen Aktuators 48 angeordnet. Der Aktuator 48 umfasst ferner einen relativ zu dem Steuerventilgehäuse 34 sowie zu der Spule 46 in Richtung der Längsachse A des Bremskrafterzeugers 10 verlagerbaren magnetischen Anker 50 der integral mit der Ventilhülse 36 ausgebildet ist. Darüber hinaus ist der Anker 50 bzw. die Ventilhülse 36 mit einer axialen Durchgangsbohrung versehen, in der sich ein Übertragungskolben 52 verschiebbar erstreckt. Der Anker 50 ist über eine Feder 54 in die in Fig.1 gezeigte Stellung vorgespannt. Die Feder 54 stützt sich mit ihrem einen Ende an der beweglichen Wand 42 ab und mit ihrem anderen Ende an einem inneren Flansch 55 an dem Anker 50. An seinem in Fig. 1 rechten Ende weist der Übertragungskolben 52 einen Aufnahmekolbenabschnitt 57 auf, der das Krafteingangsglied 30 kraftübertragend aufnimmt.

Zwischen der rechten Stirnfläche des Flansches 55 und der linken Stirnfläche des Aufnahmekolbenabschnitts 57 ist ein Sicherheitsspiel s vorgesehen, das erst überwunden werden muss, bevor der Aufnahmekolbenabschnitt 57 in Anlage mit dem Flansch 55 gelangt. Ferner ist zwischen der linken Stirnfläche des Ankers 50 und dem diesen gegenüberliegenden Abschnitt der beweglichen Wand 42 ein weiteres Spiel r vorgesehen, das erst überwunden werden muss, bevor eine mechanische Kopplung von Anker 50 und beweglicher Wand 42 und damit von Anker 50 und Primärkolben 64 vorliegt.

Die Ventilhülse 36, das Steuerventilgehäuse 34 und ein relativ zu diesen verlagerbares Ventilelement 58 bilden das eigentliche Steuerventil 22. In dem in Fig.1 gezeigten Zustand liegt die Ventilhülse 36 mit ihrem dem Ventilelement 58 zugewandten Hülsendichtsitz 60 an dem Ventilelement 58 an. Ferner ist in diesem Zustand ein an dem Steuerventilgehäuse 34 ausgebildeter Gehäusedichtsitz 62 von dem Ventilelement 58 abgehoben. In dem in Fig. 1 gezeigten Zustand verbindet das Steuerventil 32 die Unterdruckkammer 38 mit der Arbeitskammer 40. Die Unterdruckkammern 38 ist dabei mit einer Unterdruckquelle gekoppelt, nämlich mit einer gesondert ausgebildeten Vakuumpumpe 63, die angesteuert über die elektronische Steuereinheit 18 von einem Elektromotor 65 angetrieben wird. Das Krafteingangsglied wird über eine Rückstellfeder 56 in die in Fig.1 gezeigte Stellung vorgespannt.

Der Übertragungskolben 52 erstreckt sich mit seinem in Fig. 1 linken Ende in einen Primärkolben 64 hinein, der mit einer axialen Durchgangsbohrung ausgeführt ist. Der Primärkolben 64 ist dichtend in einer einseitig offenen Bohrung 66 geführt, die in dem Zylindergehäuse 14 ausgebildet ist. In der Durchgangsbohrung des Primärkolbens 64 ist ein Betätigungskolben 68 verlagerbar geführt. Auch der Betätigungskolben 68 weist eine einseitig offene Bohrung 70 auf, die mit einem in dieser verlagerbaren und am linken Ende des Übertragungskolbens 52 integral ausgebildeten Trennkolben 72 verschlossen ist. Der Trennkolben 72 schließt mit dem Betätigungskolben 68 eine Hydraulikkammer 74 ein. Der Betätigungskolben 68 liegt über einen Anschlagstift 75, der durch einen im Primärkolben 64 vorgesehenen Langlochschacht 73 hindurch geführt ist, an einer Durchmesserstufe im Inneren des Zylindergehäuses 14 an. Er ist dadurch an einer Axialbewegung in Fig. 1 nach rechts gehindert.

Die Hydraulikkammer 74 ist über einen Verbindungskanal 76 mit einem in dem Zylindergehäuse 18 ausgebildeten Fluidkanal 80 fluidisch verbunden. Der Fluidkanal 80 führt über eine Fluidleitung 78 mit einer mit der elektronischen Steuereinheit 18 gekoppelten Druckmesseinrichtung 79 zu einer schematisch gezeigten elektromagnetischen Schaltventilanordnung 82. Diese ist von der elektronischen Steuereinheit 18 ansteuerbar und befindet sich in dem in Fig. 1 gezeigten Zustand in ihrer Passivstellung, die sie aufgrund einer Vorspannfeder selbsttätig einnimmt. Bei Bestromung der Schaltventilanordnung 82 über die elektronische Steuereinheit 18 lässt sich die Schaltventilanordnung 82 in ihre Aktivstellung überführen. Die Schaltventilanordnung 82 ist mit zwei Leitungszweigen gekoppelt. In der Passivstellung ist die Fluidleitung 78 mit einem Überdruckventil 84 fluidisch verbunden, das eine Fluidströmung aus der Hydraulikkammer 74 solange blockiert, bis ein Druckschwellenwert erreicht ist, bei dem sich das Überdruckventil 84 öffnet. In der Aktivstellung lässt die Schaltventilanordnung 82 eine Fluidströmung aus der Hydraulikkammer 74 über die Fluidleitung 78 in eine sich an die Schaltventilanordnung 82 anschließenden Fluidleitung 86 zu. In der Fluidleitung 86 ist eine elektromagnetisch ansteuerbare Drosseleinrichtung 88 angeordnet, deren Aufbau und Funktionsweise im Folgenden noch erläutert wird. Ferner zweigt von der Fluidleitung 86 ein Leitungszweig 90 zu einem drucklosen Hydraulikfluidreservoir 92 ab. Vor dem Hydraulikfluidreservoir 92 sind eine Drosseleinrichtung 94 und eine Trennventilanordnung 96 angeordnet. Die Trennventilanordnung 96 ist über eine Vorspannfeder in die in Fig. 1 gezeigte Passivstellung vorgespannt, in der sie die Fluidleitung 86 mit dem Hydraulikfluidreservoir 92 fluidisch verbindet. Die Trennventilanordnung 96 kann durch Bestromung vermittels der elektronischen Steuereinheit 18 in ihre Aktivstellung umgeschaltet werden, in der sie die Fluidleitung 86 von dem Hydraulikfluidreservoir 92 fluidisch trennt.

Die Fluidleitung 86 mündet schließlich in eine Pedalgegenkraft-Simulationseinrichtung 100. Die Pedalgegenkraft-Simulationseinrichtung 100 ist integral in dem Zylindergehäuse des Hauptbremszylinders 14 ausgebildet. Sie umfasst einen Simulationskolben 102, der gegen den Widerstand einer Simulationsfeder 104 verlagerbar ist und dadurch einer durch eine Betätigung des Bremspedals 26 bedingten Bewegung des Übertragungskolbens 52 einen Widerstand entgegensetzt.

Es ist noch nachzutragen, dass in der Fluidleitung 86 parallel zu dem Überdruckventil 84 sowie parallel zu der Drosseleinrichtung 88 und in dem Leitungszweig 90 parallel zu der Drosseleinrichtung 94 jeweils Rückschlagventile angeordnet sind, die in bestimmten Betriebssituationen eine unerwünschte Fluidströmung zu der Hydraulikkammer 74 blockieren.

Wendet man sich wiederum dem Aufbau des erfindungsgemäßen Bremskrafterzeugers 12 zu, wie er in Fig.1 dargestellt ist, so erkennt man in dieser Darstellung, dass in dem Zylindergehäuse 14 neben dem Primärkolben 64 ferner ein Sekundärkolben 106 verschiebbar aufgenommen ist. Der Primärkolben 64 begrenzt zusammen mit der Begrenzungswand der Bohrung 66 und dem Sekundärkolben 106 sowie dem in Fig.1 linken Ende des Betätigungskolbens 68 eine Primärdruckkammer 108. Der Sekundärkolben 106 begrenzt zusammen mit der Begrenzungswand der Bohrung 66 eine Sekundärdruckkammer 110. Primärkolben und Sekundärkolben sind über Rückstellfedern 112 und 114 in die in Fig. 1 gezeigte Position vorgespannt.

Schließlich ist in Fig.1 noch ein Positionssensor 116 gezeigt. Der Positionssensor 116 weist einen in Fig.1 nach rechts federvorgespannten Stößel 118 auf, der mit seinem freien Ende stets an der beweglichen Wand 42 anliegt und deren aktuelle Position erfasst.

Im Folgenden soll unter Bezugnahme auf Fig.1 die Funktionsweise des erfindungsgemäßen Bremskrafterzeugers 12 erörtert werden.

In Folge einer Betätigung des Bremspedals 26 wird das Krafteingangsglied 30 mit der Kraft F beaufschlagt und gegenüber der in Fig. 1 gezeigten Ausgangsstellung entlang der Längsachse A des Bremskrafterzeugers verlagert. Die Bremspedalbetätigung wird bei voller Funktionsweise aller Komponenten - also in einer Normalbetriebssituation - unmittelbar von dem in Fig.1 gezeigten Drehwinkelsensor 24 erfasst und an die elektronische Steuereinheit 18 weitergeleitet. Diese steuert die Spule 46 an und bestromt diese nach Maßgabe vorgegebener Kennlinien und ggf. unter Berücksichtigung weiterer Parameter, beispielsweise von dem Stabilitätsprogramm bzw. dem Antiblockiersystem 20 oder der Abstandskontrolleinrichtung 22. Durch die Bestromung der Spule 46 baut sich in dieser ein Magnetfeld auf, welches den Anker 50 in Fig.1 nach links in die Spule hineinzieht. Dabei wird die Ventilhülse 36 von dem Anker 50 mitgenommen. Das Ventilelement 58 bewegt sich solange mit der Ventilhülse 36 mit, bis es an dem Gehäusedichtsitz 62 zur Anlage kommt. Sodann hebt der Hülsendichtsitz 60 von dem Ventilelement 58 ab. In der Folge werden die Unterdruckkammer 38 von der Arbeitskammer 40 isoliert sowie die Arbeitskammer 40 mit der Umgebungsatmosphäre verbunden. Es baut sich ein Überdruck in der Arbeitskammer 40 auf, der zu einer Verlagerung des Steuerventilgehäuses 34 entgegen einer Kraft einer Rückstellfeder 44 führt und damit auch zu einer Verlagerung des Primärkolbens 64 und des Sekundärkolbens 106. Dadurch baut sich in der Primärdruckkammer 108 und in der Sekundärkammer 110 jeweils ein Bremsdruck auf, der in einem an dem Bremskrafterzeuger 12 angeschlossenen Fahrzeugbremssystem zum Abbremsen des Fahrzeugs genutzt wird. Die bewegliche Wand 42 bewegt sich mit dem Steuerventilgehäuse 34 soweit, bis sich beide Dichtsitze, nämlich der Hülsendichtsitz 60 und der Gehäusedichtsitz 62, wieder in Anlage an dem Ventilelement 58 befinden. In diesem Zustand ist das System im Gleichgewicht und es tritt ohne äußere Einwirkung keine weitere Änderung mehr ein.

Wie vorstehend dargelegt, erfolgt die Betätigung des Steuerventils 32 durch eine Verlagerung des Ankers 50, der über die in der Spule 46 erzeugte Magnetkraft entlang der Längsachse A bewegt wird. Die Bewegung des Krafteingangsglieds 30 und die diese initiierende Kraft F wird allerdings in dem in Fig.1 gezeigten betätigten Zustand nicht auf den Anker 50 übertragen. Vielmehr wird diese Bewegung des Krafteingangsglieds 14 auf den Übertragungskolben 52 übertragen. Der Übertragungskolben 52 wird in der Folge innerhalb des Primärzylinders 64, insbesondere innerhalb der einseitig offenen Bohrung 70 des Betätigungskolbens 68 verlagert und verschiebt dabei den Trennkolben 72 in Fig.1 nach links, wobei der Betätigungskolben 68 wegen des in der Primärdruckkammer 108 herrschenden Hydraulikdrucks relativ zu dem Gehäuse 28 in seiner Position verharrt.

Durch die Bewegung des Trennkolbens 72 wird Hydraulikfluid aus der Hydraulikkammer 74 über den Verbindungskanal 76 und den Fluidkanal 80 zu der elektromagnetischen Schaltventilanordnung 82 gefördert. Die elektromagnetische Schaltventilanordnung 82 wird infolge der erfassten Pedalbetätigung von der elektronischen Steuereinheit 18 in ihre Aktivstellung geschaltet, in welcher sie eine Fluidströmung aus der Hydraulikkammer 74 zulässt. Ferner wird die Trennventilanordnung 96 infolge der erfassten Pedalbetätigung von der elektronischen Steuereinheit 18 in ihre Aktivstellung geschaltet, in welcher sie eine Fluidströmung aus der Hydraulikkammer 74 in das Fluidreservoir 92 blockiert. Demnach kann das aus der Hydraulikkammer 74 gedrückte Hydraulikfluid nicht in das Hydraulikfluidreservoir 102 strömen, sondern wird gegen den Widerstand der Pedalgegenkraft-Simulationsvorrichtung 100 in diese gefördert. Dabei wird der Simulationskolben 102 unter Komprimierung der Simulationsfeder 104 verschoben. Das Verhalten der Pedalgegenkraft-Simulationseinrichtung 100 wird von der Stellung des steuerbaren Drosselventils 88 beeinflusst.

Wird das Bremspedal von dem Fahrer wieder freigegeben, so bewegt sich das System in die Fig. 1 gezeigte Stellung zurück. Das Krafteingangsglied 30 wird dabei aufgrund der Wirkung der Pedalgegenkraft-Simulationseinrichtung 100 und weiterer Rückstellfedern in seine Ausgangsstellung zurück bewegt. Diese Rückstellbewegung erfolgt in Abhängigkeit von der Stellung des Drosselventils 88 mit Hysterese.

Die vorstehend geschilderten Phasen der Bremskrafterzeugung erfolgen stets unter Aufrechterhaltung des Sicherheitsspiel s, sofern man von geringen verzögerungsbedingten Schwankungen absieht. Das Sicherheitsspiel r wird jedoch auf Grund der aktuatorbedingten Verlagerung des Ankers verändert und bei sehr starker Bremsung eventuell sogar aufgebraucht.

Während der Ansteuerung des Aktuators 48 erfasst die elektronische Steuereinheit 18 permanent über den Positionssensor 116 die aktuelle Position der beweglichen Wand 42. Dadurch kann die Ist-Position des Steuerventilgehäuses 34 erfasst werden und mit einer durch die Pedalbetätigung vorgegebenen Soll-Position verglichen werden. Bei einer Abweichung von Ist-Position und Soll-Position, beispielsweise aufgrund einer Veränderung der Pedalstellung durch den Fahrer oder aufgrund anderer äußerer Einflüsse, steuert die elektronische Steuereinheit 18 den Aktuator 48 korrigierend an. Im Falle einer Notbremsung, bei welcher das Bremspedal 26 schnell und mit gro-ßer Betätigungskraft vom Fahrer niedergedrückt wird, kann die elektronische Steuereinheit 18 den Aktuator 48 auch überproportional stark bestromen, um schnell eine hohe Druckdifferenz in der Kammeranordnung aufzubauen und um in der Folge eine für die Notbremsung hinreichend große Bremskraft mit dem Bremskrafterzeuger 12 zu erzeugen.

Die vorstehende Beschreibung zeigt, dass im Normalbetrieb die auf das Krafteingangsglied ausgeübte Betätigungskraft F lediglich eine Verlagerung des Übertragungskolben 52 und in der Folge einer hydraulischen Übertragung eine Bewegung des Simulationskolbens 102 bewirkt, jedoch keinerlei unmittelbare Wirkung auf die Komponenten des Steuerventils 32 hat. Die den Primärkolben 64 verlagernde Betätigungskraft wird vielmehr durch Aktivierung des Aktuators 48 und Verlagerung des Ankers 50 initiiert, wodurch das Steuerventil 32 betätigt wird, um eine Druckdifferenz in der Kammeranordnung zu erzielen. Aufgrund dieser Druckdifferenz verlagert sich das Steuerventilgehäuse 34 und mit diesem der Primärkolben 64 sowie der Sekundärkolben 106.

Im Folgenden soll eine Notfallbetriebssituation erläutert werden, in der der erfindungsgemäße Bremskrafterzeuger 12 trotz eines Defekts an einer oder mehreren Komponenten weiter funktioniert:

Eine Notfallbetriebssituation tritt beispielsweise dann auf, wenn die Spule 46 nicht mehr ordnungsgemäß angesteuert wird. Dies kann beispielsweise daran liegen, dass der Drehwinkelsensor 22 defekt ist oder ein Defekt im Bordnetz des Fahrzeugs auftritt. Dieser Defekt führt dazu, dass die elektronische Steuereinheit 18 die Schaltventilanordnung 82 nicht in ihre Aktivstellung überführt. Bei einem derartigen fehlerhaften Betriebszustand kann das Steuerventil 32 nicht mehr über den Aktuator 48 betätigt werden. Dennoch lässt sich mit dem erfindungsgemäßen Bremskrafterzeuger 12 eine hinreichend gute Bremswirkung erzielen. Bei einer Bremspedalbetätigung wird das Krafteingangsglied 30 in Fig. 1 nach links verlagert. In der Folge wird der Übertragungskolben 62 entlang der Längsachse A in Fig. 1 nach rechts verlagert. Da jedoch die Schaltventilanordnung 82 von der elektronischen Steuereinheit 18 nicht angesteuert wird und so in der in Fig. 1 gezeigten Passivstellung verharrt, kann das in der Hydraulikkammer 74 eingeschlossene Hydraulikfluid nicht entweichen. Aufgrund der Inkompressibilität des Hydraulikfluids kommt es durch die in der Hydraulikkammer 74 eingeschlossenen Flüssigkeitssäule zunächst zu einer unmittelbaren hydromechanischen Kraftkopplung zwischen Übertragungskolben 52 und Betätigungskolben 68, der über den Verbindungszapfen 75 schließlich den Primärkolben 64 in dem Zylindergehäuse 14 verlagert. So wird die Bremspedalbetätigung zunächst unmittelbar und ohne Überwindung des Leerspiels s auf den Primärkolben 64 übertragen, was zu einem zuverlässigen und schnellen Ansprechen der Bremsanlage 10 im Notbetriebsfall führt.

Durch die Bremspedalbetätigung kommt es in einer derartigen Notbetriebssituation auch zu einem starken Druckanstieg innerhalb der Hydraulikkammer 74. Übersteigt der innerhalb der Hydraulikkammer 74 herrschende Druck den durch das Druckbegrenzungsventil 84 vorgegebenen Druckschwellenwert, so kann unter der Wirkung der Kraft F auf das Krafteingangsglied 30 Hydraulikfluid aus der Hydraulikkammer 74 über die Schaltventilanordnung 82, das Druckbegrenzungsventil 84 und das Trennventil 96 in das Reservoir entweichen. Dadurch kommt es zu einer Relatiwerlagerung des Übertragungskolbens 52 zu dem Betätigungskolben 68, wobei weiterhin der durch das Druckbegrenzungsventil 84 vorgegebene Druckschwellenwert als Druck in der Hydraulikkammer 74 herrscht. Bei weiterer starker Kraftbeaufschlagung des Krafteingangsglied 30, so dass der Druckschwellenwert überschritten wird, bewegt sich der Übertragungskolben 52 weiter relativ zu dem Betätigungskolben 68 und auch weiter relativ zu der aufgrund des Ausfalls des Aktuators unbetätigten Ventilhülse 36. Dabei wird das Sicherheitsspiel s überwunden, bis schließlich der Aufnahmekolbenabschnitt 57 an dem Flansch 55 zur Anlage kommt. Sodann sind der Übertragungskolben 52 und damit auch das Krafteingangsglied 30 mit der Ventilhülse 36 kraftübertragend verbunden. Eine weitere Verlagerung des Krafteingangsglieds 30 in Fig. 1 nach links führt demnach auch zu einer Verlagerung der Ventilhülse 36, so dass sich der Hülsendichtsitz 60 von dem Ventilelement 58 abhebt. In der Folge kommt es zu der vorstehend bereits geschilderten Konstellation, in der sich eine Druckdifferenz zwischen der Unterdruckkammer 38 und der Arbeitskammer 40 ausbilden kann. Funktioniert die mit der Unterdruckkammer gekoppelte Vakuumquelle noch korrekt, so kommt es aufgrund dieser mechanischen Verlagerung der Ventilhülse 36 zum Aufbau einer Druckdifferenz zwischen der Arbeitskammer 40 und der Unterdruckkammer 38, die eine Verlagerung der beweglichen Wand 42 nach sich zieht und in der Folge eine Verlagerung des Primärkolbens 68. Das Steuerventil 32 wird in diesem Zustand, in dem der Aktuator 48 ausgefallen ist, demnach nach Überwindung des Sicherheitsspiels s mechanisch betätigt.

In der vorstehend beschriebenen Notbetriebssituation, in der lediglich der Aktuator, nicht jedoch die Vakuumquelle ausgefallen ist, lässt sich also zunächst durch die hydromechanische Kopplung von Betätigungskolben 68 und Übertragungskolben 52 eine unmittelbare Mindestbremswirkung erzielen, die durch die Höhe des Druckschwellenwerts bestimmt ist. In der Folge lässt sich dann nach Überwindung des Sicherheitsspiels s in herkömmlicher Weise eine pneumatische Bremskrafterzeugung erzielen. Dies gilt auch für einen Fall, in dem auch die Vakuumquelle ausgefallen ist, jedoch noch hinreichend Unterdruck in der Unterdruckkammer 38 herrscht, um eine Bremskraftverstärkung zu erzielen. So ist es beispielsweise möglich, selbst bei ausgefallener Vakuumquelle noch drei bis vier Bremsvorgänge vorzunehmen, bis keine hinreichende Druckdifferenz zwischen der Unterdruckkammer 38 und der Arbeitskammer 40 mehr einstellbar ist.

Selbst in Notbetriebssituationen, in denen auch die Vakuumquelle ausgefallen ist und das zur Verfügung stehende Vakuum "aufgebraucht" ist, lässt sich mit dem erfindungsgemäßen Bremskrafterzeuger 12 auch eine rein mechanische Bremsung durchführen. Wiederum wird in derartigen Fällen zunächst nach Überschreiten des Druckschwellenwertes in der Hydraulikkammer 74 das Sicherheitsspiel s aufgebraucht, so dass es zu einer gegenseitigen Anlage von Flansch 55 und Aufnahmekolbenabschnitt 57 kommt und damit zu einer mechanischen Kopplung von Ventilhülse 36 und Krafteingangsglied 30. In der Folge wird - wie vorstehend bereits beschrieben - bei weiterer Verlagerung des Krafteingangsglieds 30 in Fig. 1 nach links die Ventilhülse 36 in Fig. 1 nach links verlagert, so dass auch das Spiel r aufgebraucht wird. Schließlich kommt die Ventilhülse 36 mit Ihrer in Fig. 1 linken Stirnfläche in gegenseitige Anlage mit der beweglichen Wand 42, so dass sich eine direkte mechanische Kopplung zwischen dem Krafteingangsglied 30 und dem mit der beweglichen Wand gekoppelten Primärkolben 64 unter Vermittlung des Aufnahmekolbenabschnitts 57 und der Ventilhülse 36 einstellt. Eine bei einer derartigen mechanischen Kopplung weitergehende Verlagerung des Krafteingangsglieds 30 in Fig. 1 nach links führt demnach zu einer unmittelbaren Verlagerung des Primärkolbens 64 und damit zu einer unmittelbaren Übertragung der Pedalbetätigungskraft auf den Primärkolben 64.

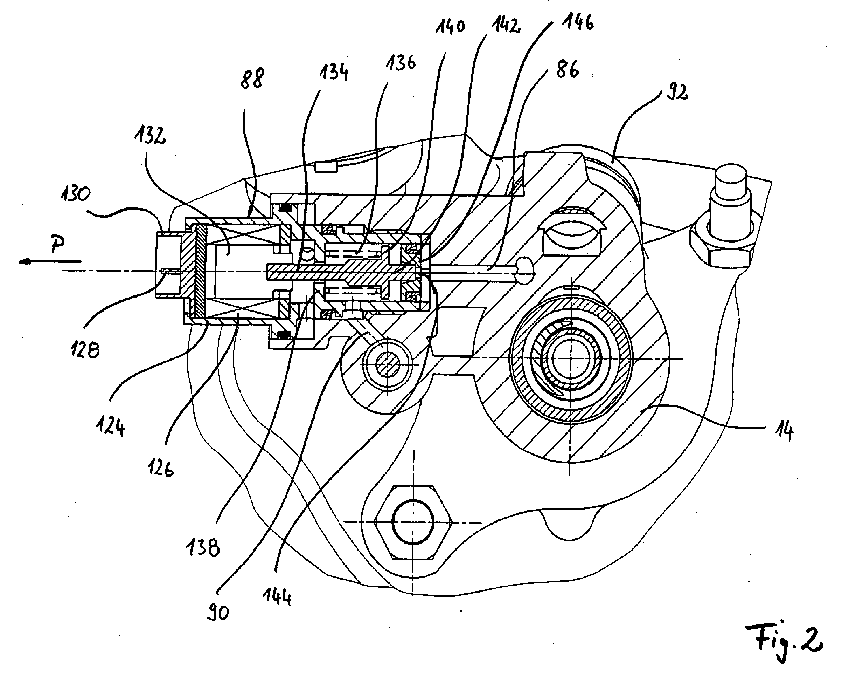

Fig.2 zeigt das Drosselventil 88 in geschnittener Detaildarstellung. Das Drosselventil 88 ist in dem Zylindergehäuse 14 in einer abgestuften Bohrung aufgenommen. Es umfasst ein Ventilgehäuse 124, in dem eine Spule 126 aufgenommen ist. Die Spule 126 kann über Kontakte 128 eines Steckverbinders 130 bestromt werden. In der Spule 126 ist ein Anker 132 verschiebbar geführt. Der Anker 134 ist mit einem Ventilkolben 134 zur gemeinsamen Bewegung gekoppelt. Der Anker 134 ist somit zusammen mit der Spule 132 innerhalb des Ventilgehäuses 124 verlagerbar. Die Baugruppe aus Anker 132 und Ventilkolben 134 ist über eine Rückstellfeder 136 in die in Fig.2 gezeigte Stellung vorgespannt. Die Rückstellfeder 136 greift dabei mit ihrem einen Ende an einem Stützflansch 138 des Ventilgehäuses 124 und mit ihrem entgegengesetzten Ende an einem Anlageflansch 140 an, der an dem Ventilkolben 134 ausgebildet ist. Der Ventilkolben 134 weist ferner einen zapfenartigen Drosselabschnitt 142 auf, der in Fig.2 in eine konische Drosselöffnung 144 hinein ragt. Die konische Drosselöffnung 144 ist in einer Drosselscheibe 146 ausgebildet, die fest und abgedichtet in dem Ventilgehäuse 124 aufgenommen ist.

In der in Fig.2 gezeigten Stellung verschließt der Drosselabschnitt 146 die Drosselöffnung 144 weitgehend vollständig, so dass keine fluidische Verbindung zwischen der Hydraulikkammer 74 und der Pedalgegenkraft-Simulationseinrichtung 100 besteht. Wird jedoch die Spule 126 bestromt, so wird der Anker 132 in Fig.2 entsprechend Pfeil P nach links verlagert. Dabei wird der Ventilkolben 134 mitgenommen, so dass sich gegen die Wirkung der Rückstellfeder 136 auch der Drosselabschnitt 146 nach Maßgabe der Verlagerung des Ankers 132 aus der Drosselöffnung 144 herausbewegt. Dadurch wird eine gedrosselte fluidische Verbindung zwischen der Fluidkammer 74 und der Pedalgegenkraft-Simulationseinrichtung 100 möglich. Der Grad der Drosselwirkung bestimmt sich durch die Stellung des Drosselabschnitts 146 innerhalb der Drosselöffnung 144.

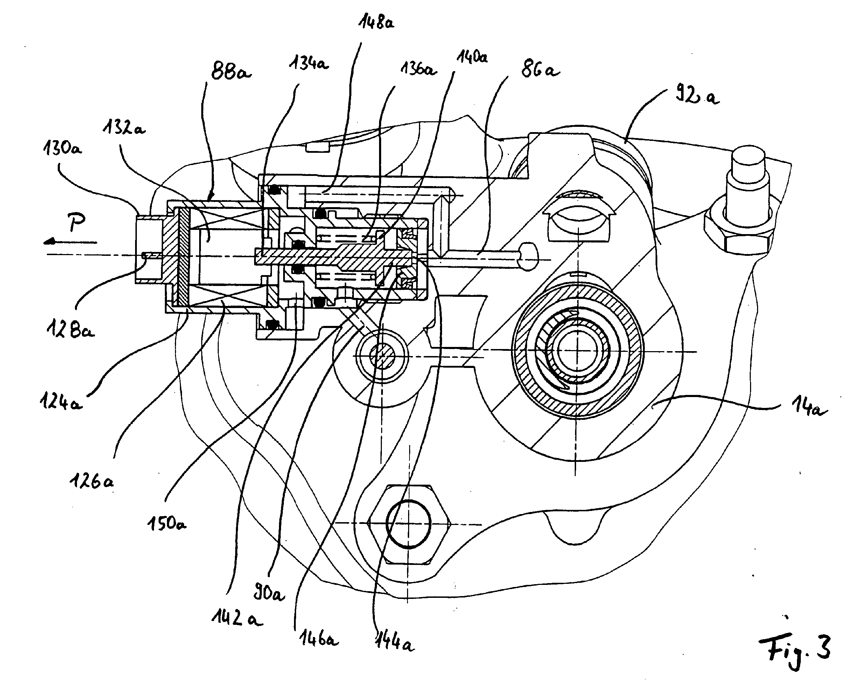

Fig.3 zeigt eine gegenüber Fig.2 geringfügig abgeänderte erfindungsgemäße Ausführungsform des Drosselventils 88. Zur Erleichterung der Beschreibung und zur Vermeidung von Wiederholungen werden für gleichartige oder gleichwirkende Komponenten die selben Bezugszeichen wie bei der Beschreibung von Fig.2 verwendet, jedoch mit dem Kleinbuchstaben "a" nachgestellt.

Die Ausführungsform gemäß Fig.3 unterscheidet sich von der Ausführungsform gemäß Fig.2 darin, dass der Ventilkolben 134b druckausgeglichen in dem Zylindergehäuse 14b geführt ist. Dies wird dadurch erreicht, dass das Hydraulikfluid aus der Hydraulikleitung 86a über eine Bypassleitung 148a und die Öffnung 150a auch in den Bereich des Ankers 132a geleitet wird, so dass letztendlich der Ventilkolben 134a druckentlastet entlang des Pfeils P verlagert werden kann. Dadurch verbessert sich die Einstellbarkeit des Ventilkolbens 134a über die Spule 126a, weil der über die Hydraulikleitung 86a anliegende Hydraulikdruck den Ventilkolben 134a nicht mehr stirnseitig belastet.

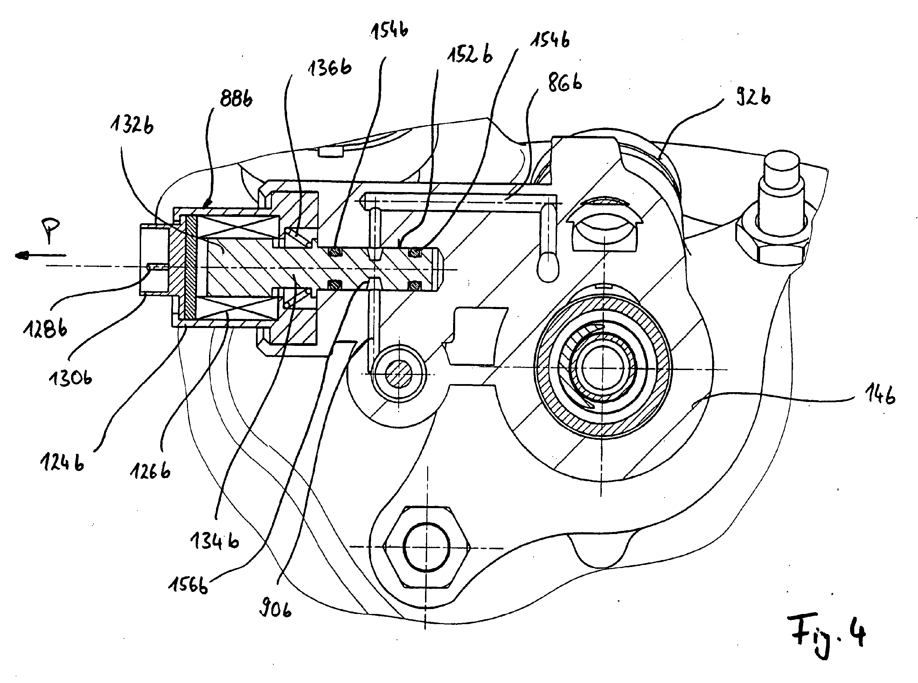

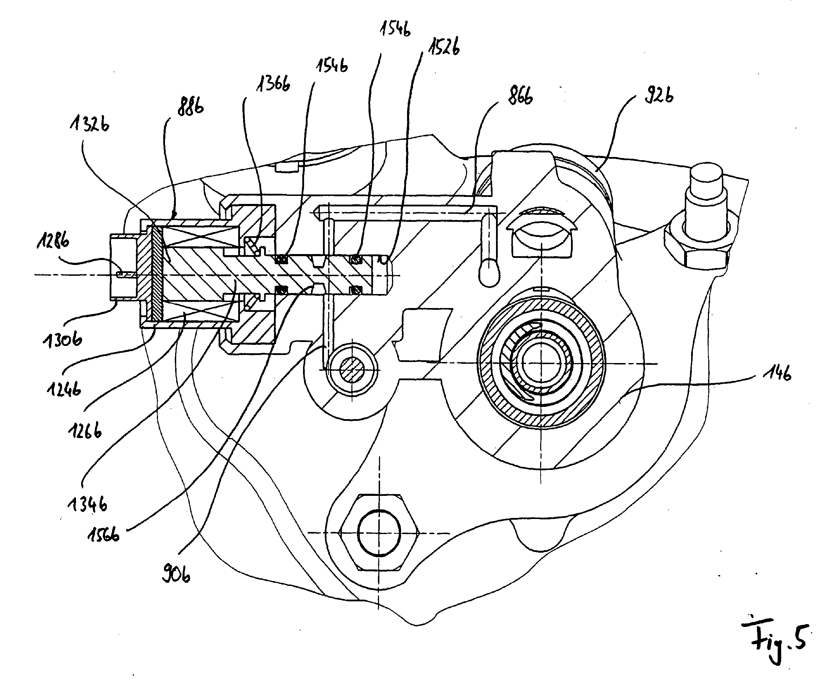

Schließlich zeigen Fig.4 und 5 ein weiteres erfindungsgemäßes Ausführungsbeispiel für das Drosselventil. Wiederum sollen für gleichwirkende oder gleichartige Komponenten die selben Bezugszeichen wie in Fig. 1 verwendet werden, jedoch mit dem Kleinbuchstaben "b" nachgestellt.

In dem Ausführungsbeispiel gemäß Fig.4 ist der Ventilkolben 134b innerhalb des Zylindergehäuses 14b in einer Ventilbohrung 152b abgedichtet geführt, wobei in den Außenumfang des Ventilkolbens 134b Ringdichtungen 154b eingelassen sind. Zwischen den beiden Ringdichtungen 154b ist eine umlaufende im Längsschnitt gemäß Fig.4 des Ventilkolbens 134b sich radial einwärts verjüngende Drosselnut 156b vorgesehen. Der Ventilkolben 134b ist integral mit dem Anker 132b ausgebildet. Die aus Ventilkolben 134b und Anker 132b bestehende Komponente ist durch die Rückstellfeder 136b in die in Fig.4 gezeigte Stellung vorgespannt, in der die Drosselnut 156b eine weitgehend drosselwirkungsfreie Verbindung zwischen den beiden Hydraulikleitungen 86b und 90b bereitstellt. Durch Bestromung der Spule 126b wird jedoch die aus Anker 132b und Ventilkolben 134b bestehende Komponente gegen die Wirkung der Rückstellfeder 136b in Fig.4 entsprechend Pfeil P nach links verlagert. Dies ist in Fig.5 zu erkennen. In Fig.5 ist die Stellung des Ventilkolbens 134b mit maximaler Drosselwirkung gezeigt. Der effektive Querschnitt, über den zwischen den Leitungen 86b und 90b über die Drosselnut 156b Hydraulikfluid hin- und herströmen kann ist gegenüber der Stellung aus Fig.4 erheblich reduziert.

Mit den in den Fig.2 bis 5 gezeigten verschiedenen Ausführungsformen erfindungsgemäßer Drosselventile lässt sich das Pedalgefühl, das ein Fahrer bei Betätigungen eines Bremspedals einer mit dem erfindungsgemäßen Bremskrafterzeuger ausgerüsteten Fahrzeugbremsanlage spürt, erheblich beeinflussen. Je nach Stellung des jeweiligen Drosselventils erfolgt die hydraulische Ansteuerung der Pedalgegenkraft-Simulationseinrichtung mehr oder weniger gedrosselt, was den Fahrer beim Niederdrücken des Bremspedals einen größeren oder weniger großen Widerstand spüren lässt und was beim Freigeben des Bremspedals zu einer größeren oder weniger großen Hysterese führt. Das Drosselventil kann vorab eingestellt werden oder aber auch in Abhängigkeit von bestimmten Betriebssituationen des Fahrzeugs bzw. nach Wahl des Fahrers unterschiedlich angesteuert werden.

## Patentansprüche

1. Bremskrafterzeuger (12) für eine hydraulische Fahrzeugbremsanlage (10) mit
- einem Krafteingangsglied (30), das mit einem Bremspedal (26) koppelbar oder gekoppelt und in einem Basisgehäuse (28) des Bremskrafterzeugers (12) verlagerbar ist,
- einem Hauptbremszylinder (14), in dem ein Primärkolben (64) verlagerbar geführt ist, wobei der Primärkolben (64) mit dem Hauptbremszylinder (14) eine Primärdruckkammer (108) zur Erzeugung eines hydraulischen Bremsdrucks begrenzt,
- einer mit dem Krafteingangsglied (30) koppelbaren Pedalgegenkraft-Simulationseinrichtung (100),
- einer Pedalbetätigungs-Erfassungseinrichtung (116) zum Erfassen einer Pedalbetätigung und
- einer Betätigungskraft-Erzeugungseinrichtung zum Ausüben einer Betätigungskraft auf den Primärkolben (64),
wobei die Pedalgegenkraft-Simulationseinrichtung (100) über ein Hydrauliksystem mit dem Krafteingangsglied (30) koppelbar ist, **dadurch gekennzeichnet, dass** das Hydrauliksystem mit einem in der hydraulischen Verbindung zur Pedalgegenkraft-Simulationseinrichtung (100) vorgesehenen Drosselventil (88) ausgebildet ist, das wahlweise in verschiedene Drosselventilstellungen schaltbar ist.

2. Bremskrafterzeuger (12) nach Anspruch 1,
**dadurch gekennzeichnet, dass** das Drosselventil (88) in einer Hydraulikleitung (78, 86) zwischen einer Hydraulikkammer (74) der Betätigungskraft-Erzeugungseinrichtung und der Pedalgegenkraft-Simulationseinrichtung (100), vorzugsweise zwischen der Pedalgegenkraft-Simulationseinrichtung (100) und einer Schaltventilanordnung (82), vorgesehen ist.

3. Bremskrafterzeuger (12) nach Anspruch 1 oder 2,
**dadurch gekennzeichnet, dass** das Drosselventil (88) nach Maßgabe eines vorbestimmten Drosselverhaltens in eine bestimmte im wesentlichen unveränderte Drosselstellung schaltbar ist.

4. Bremskrafterzeuger (12) nach Anspruch 2,
**dadurch gekennzeichnet, dass** das Drosselventil (88) elektromagnetisch ansteuerbar ist, wobei die Drosselventilstellung nach Maßgabe der elektromagnetischen Ansteuerung veränderbar ist.

5. Bremskrafterzeuger (12) nach Anspruch 4,
**dadurch gekennzeichnet, dass** das Drosselventil (88) nach Maßgabe bestimmter Betriebsparameter des Fahrzeugs ansteuerbar ist.

6. Bremskrafterzeuger (12) nach einem der vorangehenden Ansprüche,
**dadurch gekennzeichnet, dass** das Drosselventil (88) ein Ventilgehäuse (124) und einen in dem Ventilgehäuse (124), vorzugsweise druckentlastet, verlagerbar geführten Ventilkolben (134) aufweist.

7. Bremskrafterzeuger (12) nach Anspruch 6,
**dadurch gekennzeichnet, dass** das Ventilgehäuse (124) eine bestrombare Spule (126) aufnimmt und dass der Ventilkolben (134) integral mit einem Ankerelement (132) ausgebildet oder zur gemeinsamen Bewegung mit diesem gekoppelt ist.

8. Bremskrafterzeuger (12) nach Anspruch 6 oder 7,
**dadurch gekennzeichnet, dass** das Ventilgehäuse (124) eine Drosselöffnung (144) aufweist, die in der fluidischen Verbindung zwischen Betätigungskraft-Erzeugungseinrichtung und Pedalgegenkraft-Simulationseinrichtung (100) liegt, und dass der Ventilkolben (134) einen Drosselabschnitt (142) aufweist, der in Abhängigkeit von der Drosselventilstellung in der Drosselöffnung (144) positionierbar ist.

9. Bremskrafterzeuger (12) nach Anspruch 8,
**dadurch gekennzeichnet, dass** die Drosselöffnung (144) konisch ausgebildet ist.

10. Bremskrafterzeuger (12) nach Anspruch 8 oder 9,
**dadurch gekennzeichnet, dass** der Ventilkolben (134) durch ein Federelement (136) in die Drosselöffnung (144), vorzugsweise in eine Drosselventilstellung maximaler Drosselwirkung, vorgespannt ist.

11. Bremskrafterzeuger (12b) nach Anspruch 6 oder 7,
**dadurch gekennzeichnet, dass** der Ventilkolben (134b) zylindrisch ausgebildet ist und in einer Ventilbohrung (152b) in dem Ventilgehäuse oder dem Basisgehäuse (14b) abgedichtet aufgenommen ist, wobei die Ventilbohrung (152b) in der fluidischen Verbindung zwischen Betätigungskraft-Erzeugungseinrichtung und Pedalgegenkraft-Simulationseinrichtung (100) liegt, und dass der Ventilkolben (134b) mit einer Drosselnut (156b) ausgebildet ist, die in Abhängigkeit von der Drosselventilstellung eine gedrosselte Verbindung zwischen Betätigungskraft-Erzeugungseinrichtung und Pedalgegenkraft-Simulationseinrichtung (100) bereitstellt.

12. Bremskrafterzeuger (12b) nach Anspruch 11,
**dadurch gekennzeichnet, dass** die Drosselnut (156b) mit einem sich verjüngenden Profil versehen ist.

13. Bremskrafterzeuger (12b) nach Anspruch 11 oder 12,
**dadurch gekennzeichnet, dass** der Ventilkolben (134b) durch ein Federelement (136b) in eine vorbestimmte Drosselventilstellung, vorzugsweise in eine Drosselventilstellung minimaler Drosselwirkung, vorgespannt ist.

14. Bremsanlage (10) für ein Kraftfahrzeug mit einem Bremskrafterzeuger (12) nach einem der vorangehenden Ansprüche.

## Claims

1. Braking force generator (12) for a hydraulic vehicle braking system (10), comprising
- a force input element (30) which can be coupled, or is coupled, to a brake pedal (26) and is displaceable in a basic casing (28) of the braking force generator (12),
- a master brake cylinder (14), in which a primary piston (64) is displaceably guided, the primary piston (64) delimiting, with the master brake cylinder (14), a primary pressure chamber (108) for generating a hydraulic braking pressure,
- a pedal counterforce simulation means (100) that can be coupled to the force input element (30),
- a pedal actuation detection means (116) for detecting a pedal actuation, and
- an actuating force generation means for exerting an actuating force on the primary piston (64),
the pedal counterforce simulation means (100) being adapted to be coupled to the force input element (30) via a hydraulic system, **characterized in that** the hydraulic system is realized with a throttle valve (88) which is provided in the hydraulic connection to the pedal counterforce simulation means (100) and can optionally be switched into different throttle valve positions.

2. Braking force generator (12) according to claim 1,
**characterized in that** the throttle valve (88) is provided in a hydraulic line (78, 86) between a hydraulic chamber (74) of the actuating force generation means and the pedal counterforce simulation means (100), preferably between the pedal counterforce simulation means (100) and a pilot valve arrangement (82).

3. Braking force generator (12) according to claim 1 or 2,
**characterized in that** the throttle valve (88) can be shifted into a certain, substantially unchanged, throttle position according to a predetermined throttle behaviour.

4. Braking force generator (12) according to claim 2,
**characterized in that** the throttle valve (88) can be activated electromagnetically, the throttle valve position being variable according to the electromagnetic activation.

5. Braking force generator (12) according to claim 4,
**characterized in that** the throttle valve (88) can be activated according to certain operating parameters of the vehicle.

6. Braking force generator (12) according to any one of the preceding claims,
**characterized in that** the throttle valve (88) comprises a valve casing (124) and a valve piston (134) displaceably guided, preferably in a pressure-relieved state, in the valve casing (124).

7. Braking force generator (12) according to claim 6,
**characterized in that** the valve casing (124) accommodates an energizable coil (126), and **in that** the valve piston (134) is realized integrally with an armature element (132) or is coupled to same for common movement.

8. Braking force generator (12) according to claim 6 or 7,
**characterized in that** the valve casing (124) has a throttle aperture (144) which is located in the fluidic connection between the actuation force generation means and the pedal counterforce simulation means (100), and **in that** the valve piston (134) has a throttle portion (142) which can be positioned in dependence on the throttle valve position in the throttle aperture (144).

9. Braking force generator (12) according to claim 8,
**characterized in that** the throttle aperture (144) is conically shaped.

10. Braking force generator (12) according to claim 8 or 9,
**characterized in that** the valve piston (134) is biased by a spring element (136) into the throttle aperture (144), preferably into a throttle valve position of maximum throttle effect.

11. Braking force generator (12b) according to claim 6 or 7,
**characterized in that** the valve piston (134b) is cylindrically shaped and is accommodated in a sealed manner in a valve bore (152b) in the valve casing or in the basic casing (14b), the valve bore (152b) being located in the fluidic connection between the actuation force generation means and the pedal counterforce simulation means (100), and **in that** the valve piston (134b) is realized with a throttle groove (156b) which, in dependence on the throttle valve position, provides a throttled connection between the actuation force generation means and the pedal counterforce simulation means (100).

12. Braking force generator (12b) according to claim 11,
**characterized in that** the throttle groove (156b) is provided with a tapering profile.

13. Braking force generator (12b) according to claim 11 or 12,
**characterized in that** the valve piston (134b) is biased by a spring element (136b) into a predetermined throttle valve position, preferably into a throttle valve position of minimum throttle effect.

14. Braking system (10) for a motor vehicle, comprising a braking force generator (12) according to any one of the preceding claims.

## Revendications

1. Générateur de force de freinage (12) pour un système de freinage hydraulique de véhicule (10) avec
- un élément d'entrée de force (30) qui peut être couplé ou est couplé avec une pédale de frein (26) et peut être déplacé dans un boîtier de base (28) du générateur de force de freinage (12),
- un maître cylindre de frein (14), dans lequel un piston primaire (64) est guidé de façon déplaçable, le piston primaire (64) délimitant avec le maître cylindre de frein (14) une chambre de pression primaire (108) pour générer une pression de frein hydraulique,
- un dispositif de simulation de force antagoniste de pédale (100) pouvant être couplé avec l'élément d'entrée de force (30),
- un dispositif de détection de commande de pédale (116) pour l'enregistrement d'un actionnement de pédale et
- un dispositif de génération de force d'actionnement pour exercer une force d'actionnement sur le piston primaire (64),
le dispositif de simulation de force antagoniste de pédale (100) pouvant être couplé par un système hydraulique avec l'élément d'entrée de force (30), **caractérisé en ce que** le système hydraulique est réalisé avec une soupape d'étranglement (88) prévue dans la liaison hydraulique avec le dispositif de simulation de force antagoniste de pédale (100), laquelle soupape pouvant être commutée au choix dans différentes positions de soupape d'étranglement.

2. Générateur de force de freinage (12) selon la revendication 1,
**caractérisé en ce que** la soupape d'étranglement (88) est prévue dans une conduite hydraulique (78, 86) entre une chambre hydraulique (74) du dispositif de génération de force de commande et le dispositif de simulation de force antagoniste de pédale (100), de préférence entre le dispositif de simulation de force antagoniste de pédale (100) et un agencement de soupape de commande (82).

3. Générateur de force de freinage (12) selon la revendication 1 ou 2,
**caractérisé en ce que** la soupape d'étranglement (88) peut être commutée en fonction d'un comportement à l'étranglement prédéfini dans une position d'étranglement définie et sensiblement non modifiée.

4. Générateur de force de freinage (12) selon la revendication 2,
**caractérisé en ce que** la soupape d'étranglement (88) peut être actionnée de façon électromagnétique, la position de la soupape d'étranglement pouvant être modifiée en fonction de la commande électromagnétique.

5. Générateur de force de freinage (12) selon la revendication 4,
**caractérisé en ce que** la soupape d'étranglement (88) peut être actionnée en fonction de certains paramètres de service du véhicule.

6. Générateur de force de freinage (12) selon l'une quelconque des revendications précédentes,
**caractérisé en ce que** la soupape d'étranglement (88) comporte un boîtier de soupape (124) et un piston à soupape (134) guidé de façon déplaçable, de préférence soulagé en pression, dans le boîtier de soupape (124).

7. Générateur de force de freinage (12) selon la revendication 6,
**caractérisé en ce que** le boîtier de soupape (124) reçoit une bobine (126) pouvant être alimentée en courant et **en ce que** le piston à soupape (134) est réalisé intégralement avec un élément d'induit (132) ou est couplé avec celui-ci pour le déplacement commun.

8. Générateur de force de freinage (12), selon la revendication 6 ou 7,
**caractérisé en ce que** le boîtier de soupape (124) présente une ouverture d'étranglement (144) qui est située dans la liaison fluidique entre le dispositif de génération de force d'actionnement et le dispositif de simulation de force antagoniste de pédale (100), et **en ce que** le piston à soupape (134) présente une partie d'étranglement (142) qui peut être positionnée en fonction de la position de la soupape d'étranglement dans l'ouverture d'étranglement (144).

9. Générateur de force de freinage (12) selon la revendication 8,
**caractérisé en ce que** l'ouverture d'étranglement (144) est conçue en forme conique.

10. Générateur de force de freinage (12) selon la revendication 8 ou 9,
**caractérisé en ce que** le piston à soupape (134) est pré-tendu par un élément de ressort (136) dans l'ouverture d'étranglement (144), de préférence dans une position de soupape d'étranglement avec un effet d'étranglement maximum.

11. Générateur de force de freinage (12b) selon la revendication 6 ou 7,
**caractérisé en ce que** le piston à soupape (134b) est conçu en forme cylindrique et est réceptionné de façon étanche dans un alésage de soupape (152b) dans le boîtier de soupape ou le boîtier de base (14b), l'alésage de soupape (152b) étant situé dans la liaison fluidique entre le dispositif de génération de force d'actionnement et le dispositif de simulation de force antagoniste de pédale (100), et **en ce que** le piston à soupape (134b) est conçu avec une rainure d'étranglement (156b) qui fournit une liaison étranglée entre le dispositif de génération de force d'actionnement et le dispositif de simulation de force antagoniste de pédale (100) en fonction de la position de la soupape d'étranglement.

12. Générateur de force de freinage (12b) selon la revendication 11,
**caractérisé en ce que** la rainure d'étranglement (156b) est dotée d'un profil qui se rétrécit.

13. Générateur de force de freinage (12b) selon la revendication 11 ou 12,
**caractérisé en ce que** le piston à soupape (134b) est pré-tendu par un élément de ressort (136b) dans une position de soupape d'étranglement prédéfinie, de préférence dans une position de soupape d'étranglement avec un effet d'étranglement minimum.

14. Système de freinage (10) pour un véhicule avec un générateur de force de freinage (12) selon l'une quelconque des revendications précédentes.
